# EUROPEAN PATENT APPLICATION

(11) **EP 4 697 729 A1**
(43) Date of publication of application: **18.02.2026**
(21) Application number: 25193242.2
(22) Date of filing: 31.07.2025
(51) Int. Cl.: H04N 21/234, A63F 13/352, A63F 13/355, A63F 13/86, H04N 21/478, H04N 21/2225, H04N 21/231

(54) **CONTENT STREAMING SYSTEM AND METHOD**

(30) Priority: 13.08.2024 GB 202411937
(71) Applicant: Sony Interactive Entertainment Inc., Tokyo 108-0075 (JP)
(72) Inventor: BARMAN, Nabajeet, London, W1F 7LP (GB); CURRIUS, Roc Ramon, London, W1F 7LP (GB); ZADTOOTAGHAJ, Saman, London, W1F 7LP (GB); MOTILLA, Daniel Montero, London, W1F 7LP (GB); SANDERS, Matthew William, London, W1F 7LP (GB); BIGOS, Andrew James, London, W1F 7LP (GB)
(74) Representative: Fish & Richardson P.C.

(57) **Abstract**

An interactive content distribution system comprises an edge server configured to receive interactive content streamed from a primary server, and stream it to a client device, the edge server being configured to receive data streamed from the client device, the edge server being configured to have the interactive content stream and the video camera feed stream composited together to generate a sharing stream, and the edge server being configured to have the sharing stream distributed to one or more spectator devices.

## Description

### BACKGROUND OF THE INVENTION

### Field of the invention

The present invention relates to a content streaming system and method.

### Description of the Prior Art

Content providers such as video streaming services, and similarly some websites, typically have primary or source servers that provide their content, and these may for example be geographically located close to the service provider.

However, for providers with a global reach, this model could result in unwanted latencies for users who are a significant distance from the primary servers. As a result, so-called edge-servers may be deployed on a regional basis to cache content from the primary servers to deliver to users in their region, thereby reducing latency for those users.

However, whilst this approach works well for non-interactive content, where the edge servers act as passive stores for copies of content originating on primary servers and can be updated on a scheduled basis in a similar manner to a virtual warehouse, it is not appropriate for interactive content such as videogames, where the content is being generated by a primary server in real time in response to inputs from users; in this case an edge server would simply appear to be another node forwarding the live content between primary server and the client - but game applications in particular are very sensitive to latency and so this problem can be acute when there is a geographical separation between primary servers and users, and so an equivalent to such edge servers for interactive content would be desirable.

The present invention seeks to alleviate or mitigate this problem.

### SUMMARY OF THE INVENTION

Various aspects and features of the present invention are defined in the appended claims and within the text of the accompanying description.

In a first aspect, an interactive content distribution system is provided in accordance with claim 1.

In another aspect, a method of interactive content distribution is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a server - client system known in the art.
- Figure 2 is a schematic diagram of an interactive content provision system in accordance with embodiments of the present description.
- Figure 3 is a schematic diagram of an interactive content provision system in accordance with embodiments of the present description.
- Figure 4 is a schematic diagram of an interactive content provision system in accordance with embodiments of the present description.
- Figure 5 is a schematic diagram of a client device system in accordance with embodiments of the present description.
- Figure 6 is a flow diagram of a method of interactive content provision in accordance with embodiments of the present description.

### DESCRIPTION OF THE EMBODIMENTS

An interactive content distribution system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

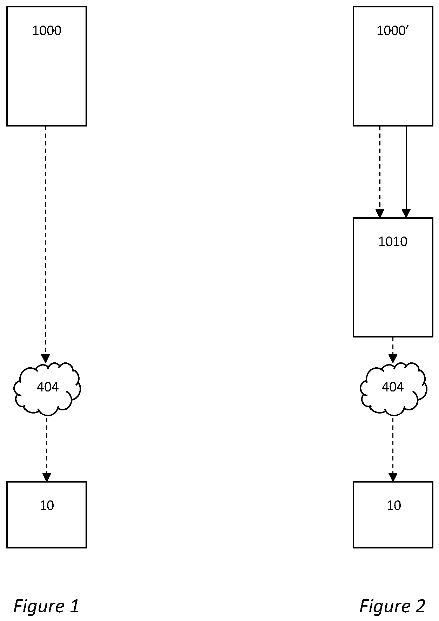

Referring now to the drawings, wherein like reference numerals designate identical or corresponding parts throughout the several views, Figure 1 shows a conventional server-client arrangement comprising a server 1000 communicating with a client device 10 via a long distance network 404, such as the internet.

The time taken for data to travel from the server to the client may be relatively long, in part as a pure function of distance, but more significantly because hops (connections within the internet linking the primary server to the client) tend to add time and slow down the effective speed of the data.

Hence for streaming a videogame, where the current game image will be displayed when it has been received, the latency for that image is both a function of distance travelled (which may be thought of as contributing to the leading-edge latency) but also data size, as a large amount of data travelling slowly takes longer to completely arrive (which may be thought of as contributing to the trailing-edge latency).

In conventional edge-server systems, in effect this problem is bypassed by providing copies of the source data closer to the user so there is less distance and fewer hops, making the data more responsive and fast.

However, for interactive content this approach is not possible as the source content is created live in response to user interactions. Whilst it would be possible to provide more primary servers closer to the user, this is then not an edge-server system.

### Edge Server

Accordingly, in embodiments of the present description, edge-server systems are provided that improve latency for at least some parts of a streamed interactive content such as a videogame.

Referring to Figure 2, in an embodiment of the present description an interactive content provision system (or 'edge server system' elsewhere herein, e.g. one including an edge server as well as a primary/source server for providing interactive content to a client) comprises a modified primary server 1000', an edge server 1010, and optionally the client device 10 (e.g. when a client joins to access content provided by the edge server system).

In this configuration, the primary server still streams interactive videogame content to the edge server, signified by the dashed line. Clearly there is scope to optimise the path between these two servers as they will be persistent points of communication, and this in itself can assist with latency and speed (and hence both leading edge and training edge latency).

It will be appreciated that there may be multiple edge servers deployed at disparate locations geographically and/or according to network topology, and one appropriate to the end client for this interactive content is selected for this purpose.

The edge server can then be utilised to reduce the amount of data streamed from the primary server in one or more successively more interactive modes.

### First Mode

In a first mode, a game may have a non-interactive element (although typically they can be skipped by the user) such as a so-called cut scene. Conventionally the primary server streams these the same as any other part of the game content.

However, in instances of the present description, the primary server may instead output data identifying such cut-scenes, where these occur, rather than the cut-scenes themselves (such request, command, or metadata is signified by the solid line); the edge server may then provide these from a local cache.

In this case the cut-scenes may be pre-recorded video associated with the game, or may be scripted animation within the game. In the latter case, the resulting scripted animation may be recorded and played in a similar manner to pre-recorded video at the edge server. A primary server may then send an instruction to the edge server that it should stream the relevant recorded content from its cache instead of streaming the resulting video itself.

Optionally, the edge server can respond to the instruction to confirm whether or not it has the relevant recorded content. If it does not, then the server could generate and output it as it would conventionally, with instruction for the edge server to also record the stream. Then when the cut scene is encountered again by another instance of the game on the primary server, that instance would not need to generate its own stream.

In this way an edge server could build up a repository of such cut scenes. This may be of use particularly for a game where different versions of a main character are available and so multiple versions of a scripted cut-scene may be possible.

The above first mode relates to content that is non-interactive that is interspersed between periods of interactive content.

Meanwhile a second mode relates to content that is non-interactive that is provided in parallel with interactive content.

### Second Mode

An example of this is audio; a whilst a user may be changing position and viewpoint interactively within a game and so changing the streamed images, which are hence interactive, typically some music, some ambient sounds, and some dialogue may persist independent of that interaction, or be modified only in a relatively simple manner (e.g. changing relative volume levels on respective channels). As such this may be considered as non-interactive content running in parallel with the interactive content.

In practice such content is typically interactive in the sense that it is triggered by changes to the game state, but typically once triggered/started it is then played back in a non-interactive fashion rather than being generated on a frame-by-frame or real time basis like the in-game images.

Hence in this second mode, the edge server can cache content that is non-interactive that is provided in parallel with interactive content. Put another way, it can cache pre-recorded elements of the content (i.e. inherently non-interactive content components) that are then used interactively (i.e. triggered/selected and played back responsive to evolving gameplay and user actions), but are non-interactive during use (i.e. simply play back). Notably even such non-interactive content can typically be interrupted and skipped, and as noted above may have the playback modified by changing channel volumes or applying effects such as echo.

Hence in this mode the primary server may stream interactively generated images, but in a similar manner to the cut-scenes, not stream the (or all of the) audio that accompanies them. Instead, the server can output data identifying the audio data to be produced and the timing for it to the edge server, in a generally similar manner to how it would internally output a request for the audio asset for playback at a specific moment from an audio file repository stored locally at the primary server.

The edge server can then receive request from the primary server along with the stream, add the identified audio, and relay this to the client. The edge server may also implement channel level adjustment (e.g. changing audio levels for stereo, 5.1 or 7.1 sound, for example in response to primary server instructions, to represent changes of position or distance relative to the virtual sound source).

The edge server may also implement environmental processing on the audio such as echoes, or cache audio with such processing already applied, selecting the appropriate version based on instructions included in or in association with the server stream.

By avoiding the need to include at least some dialogue, music, ambient sounds, and/or common sounds like footsteps or gunshots from the primary server's data stream the overall stream from the primary server can be smaller on a frame-by-frame basis.

As well as freeing up bandwidth and potential congestion at the primary server, this can also reduce the trailing edge latency of the stream as the overall time to completion of data associated with a current frame of content will typically be shorter for the majority of the network between the primary server and the edge server. As a result the completed image will appear on the client's screen earlier.

If the first mode relates to wholly non-interactive content, and the second mode relates to non-interactive content instigated in parallel with interactive content, then a third mode relates to interactive content that is currently not being interacted with.

### Third Mode

This typically occurs when the viewpoint of the game is controlled by the game itself rather than the user, and so typically a large proportion of the scene is either static or predictable/scripted. Hence for example in platform games and so-called metroidvania games, most of the on-screen environment is static for the duration of time that the user is playing, and typically flips between static environments every few seconds or minutes. Similarly, dialogue scenes with non-player characters ('NPC's) often adopt a fixed camera viewpoint and so the majority of the image can be predetermined. Similar observations apply to items such as in-game menus, skill trees, maps, and the like, which might change as game play evolves (e.g. more of a map becomes visible) but at any given time tend to be static when displayed.

Hence in the third mode, the edge server is provided with cached image data for known views of the game - e.g. respective levels of a platform game, or footage including the background for NPC dialogues, or even footage of NPC dialogues for some (e.g. N most common) or all dialogue trees of some (e.g. P most common) or all NPCs.

The primary server can then provide information to the edge server indicating whether image information from the cache is required, or background image information, and stream only those parts of the image that diverge from the cached version. For example in a platform game, these may include the main character, current enemies, and any part of the scene that includes a moving element of the environment, or an element affected by lighting effects, for example. Meanwhile the rest of the image need not be included in the stream.

Which parts of the image are included in the stream and which are not may be indicated for example by using image tiles or other addressable image blocks. The interactive content may be streamed to the edge server on a tile-by tile or block-by block basis, and the missing blocks are then added to the stream by the edge server. Alternatively the interactive content may be streamed as a whole image with for example black/blank regions where the cached content will be used, and the streamed image is then updated as appropriate by the edge server. This may be done either whilst the stream is still encoded (for example substituting larger encoded cached data for the smaller encoded blank data) or after decoding the image, merging it with the cached image, and re-encoding and sending it.

In this way, the amount of data streamed from the primary server can be significantly reduced, again freeing up bandwidth and potential congestion at the primary server, and again also reducing the trailing edge latency of the stream as the overall time to completion of data associated with a current frame of content will typically be shorter for the majority of the network between the primary server and the edge server. As a result the completed image will appear on the client's screen earlier.

As noted above, this approach can be used when a large proportion of the scene is predictable/scripted. In this case it may therefore be used for cut-scenes using scripted animation within the game that feature a main character whose appearance has been configured by the user, either by a face/body editor in the game, and/or by the selection of clothes, armaments and the like that they have equipped.

In this case, the part of the cut-scene comprising the customised character can be transmitted from the primary server, and the rest can be added at the edge server.

A similar implementation may be where pre-recorded video is incorporated into the game; this may happen when a user is navigating a skill tree, and an animated video shown what a new skill will do. At other times, it is an element of the environment such as a television programme. Again the primary server can indicate where within the streamed image the video is to go (optionally with appropriate scaling and/or warping), and the edge server can incorporate it.

As an extension of the third mode, alternatively or in addition to the techniques of the third mode optionally the edge server could cache the last complete image sent to the client. Then, if the next generated image did not include a change in field of view (for example because the user did not move their character or view point between successive frames) then this could be signalled to the edge server, and only those parts of the next generated image that are different from the previous image need be transmitted. This may again take the form of transmitting only a subset of tiles or blocks encompassing areas of change, or an image with unchanged areas masked for replacement with image data at the edge server. Optionally alternatively it may take the form of delta data encoding the change between the successive images; the edge server would then need to compute the resulting new image.

A further extension of this mode could use motion vectors for motion between the cached and next video image to offset the image data in the cache and still use it, even if the user does move their viewpoint slightly between frames. In this case the relative position of the static elements of the two images can be easily indicated by pan and or zoom metadata, whilst any new image data brought into view can be transmitted from the primary server. Dynamic elements of the image (such as moving characters) can be transmitted from the primary server as before, but may also be optionally encoded using a motion-aware encoding scheme such as H.264.

In each case, this would again reduce the size of the overall stream from the primary server since it would only need to transmit frame-to-frame differences in the images.

As well as freeing up bandwidth and potential congestion at the primary server, again this can also reduce the trailing edge latency of the stream as the overall time to completion of data associated with a current frame of content will typically be shorter for the majority of the network between the primary server and the edge server. As a result the completed image will appear on the client's screen earlier.

### Fourth Mode

Finally, in a fourth mode, the edge server can interact with the primary server to offload some of the rendering requirements of the primary server. For example, most games have a foreground region that is typically constructed from polygons to which textures are applied, and which are typically interactive in the sense of being known geometry within the environment - but beyond a certain draw distance this can be replaced with elements that simply provide background. A common example would be a so-called skybox, which provides a spherical or hemispherical background image of the distant environment (e.g. the sky, and perhaps distant mountains). This fills the screen wherever there is no foreground content.

In the fourth mode, the sky box is either not rendered by the primary server, or is rendered at a low resolution, or is rendered as normal but in each case is not included in the transmitted stream (for example being masked off using z-axis information within the game environment that indicates the furthest extend of the foreground objects). This again reduces the size of the overall stream from the primary server, with the attendant benefits described elsewhere herein.

The primary server also transmits information to the edge sever indicating the viewpoint of the image (e.g. the direction of view and field of view, and typically also the location in the game world) and the edge server then selects the appropriate element(s) (e.g. a skybox), and the appropriate orientation of the skybox relative to the viewpoint, and adds the skybox image data in to the streamed image to complete it.

This approach need not be limited to the skybox, although this is likely to account for a relatively large proportion of the transmitted image in some games; it may also be applied to elements of a heads-up display or other constant overlay on the image that need not then be included in the primary server image, or at a lower resolution (for example if this helps with transparent operation of the game).

Hence it may also be applied for example to part of the in-game geometry that, in some games, fulfils a similar or complementary function to the skybox, such as the stadium in a football game, and/or the spectators in it - for example when these are at a sufficient distance from the camera viewpoint / foreground action that it is not obvious if they are re-used or generic crowd animations or the like. A small number of variations could be made available (e.g. depending on respective teams, weather, day or evening match and the like), and the most appropriate can be requested by the primary server.

It will be appreciated that the primary server and the edge server may operate in any of the above modes, both sequentially and/or in parallel (i.e. using different modes for different parts of the content, either for different image frames or within different parts of the same image frame, as appropriate).

Hence in general terms, for each of these four modes, the edge server caches game assets (videos, images, skyboxes, overlays, etc.), and receives dynamically generated content from the primary server (i.e. content that is not predetermined and common to most or all instances of the game), such as for example the actions of the current player and enemies, or viewpoints not already cached in the edge server, either at set-up or just for the preceding frame. The edge server then combines the received content with cached content as appropriate, typically in response to metadata indicating relevant aspects of the current game state, before passing the combined result on to the end client.

Advantageously therefore the majority of the network path, from the primary server to the edge server, is only traversed by the smaller dynamic component of the content, reducing bandwidth utilisation, and congestion, and the duration between the leading and trailing edges of the data and thus the overall time to completion of the reception of the data.

Providing the time taken by the edge server to fill in the rest of the content is shorter than the time saved by only sending part of the content from the primary server, the result is a net reduction in latency when the complete content is delivered to the end client.

The above caveat may be tested for as part of the process; hence if the client has a high quality connection (e.g. fast, with high bandwidth) between the client and the primary server, then optionally the system may revert to a traditional streaming model, just streaming the original full output from the primary server (even if the edge server is still a hop / relay on the path between them).

### Caching Options

A primary server may deliver content to multiple edge servers. Whilst in principle all edge servers could be provided with all content needed to implement some or all of the techniques / modes herein, for a large portfolio of games this may be a significant amount of data.

Notably for a fast implementation at the edge server, that data should preferably be available for fast recall, e.g. within RAM, or an equivalent high speed buffer, rather than, say, stored on an HDD or raid array.

This in turn imposes a practical limit on the number of assets that can be stored for use by the edge server.

Accordingly, in embodiments of the present description, the content streaming system assesses which assets to make available, e.g. in accessible / 'working' memory (i.e. memory capable of delivering the assets quickly enough to contribute to latency reduction).

This assessment may make use of one or more of the following metrics:
- Which games are most commonly accessed via that edge server
   - This could be used to provide initial asset sets
- Where the server is located
   - This could be used to select regionalised versions of assets, e.g. the language of the dialogue
- Which particular assets are used by the edge server most frequently
   - For example footstep audio may be frequent, whilst a specific line of dialogue might not
- The equivalent server bandwidth cost of the asset x frequency
   - A small but frequently used asset may reduce overall bandwidth more than a large but rarely used asset.
- The distribution of saved bandwidth
   - A cut-scene could save a lot of bandwidth for 30 seconds, but perhaps only once an hour; as such it may not help with general congestion or trailing edge latency as much as an asset that saves less band width, but does so almost continuously. The relative value of these assets may depend on further factors such as network conditions at the primary and/or edge servers, quality of service thresholds, current user activity, and the like.

Alternatively or in addition, other metrics not directly related to the assets may influence the operation of the system, such as current primary server load, current edge server load, current actual latency and the latency sensitivity of the client's game (either in general or at that point), user bandwidth, and network congestion. Hence for example a cut-scene could save a lot of bandwidth for 30 seconds but if the user does not need to react to it, then it may be latency insensitive and so does not need to be supplied by the edge server - unless, perhaps, there is network congestion at the primary server because it is running near capacity, in which case the bandwidth reduction from not outputting it at the primary server would be beneficial overall.

The edge server can keep track of which assets are used and how frequently, to determine an effective bandwidth per period value for respective assets, and retain those with the highest value in working memory.

In order to enable this cache to evolve, the cache may comprise a short term and a longer term component, with new cache items received from the primary server being evaluated against longer term items.

Alternatively or in addition, where some items are stored in working memory and some are in slower storage (either at the edge server or at the primary server or a third server, not shown), a track of the number of requests to use an asset made by the primary server may be used to determine promotion of an asset from storage to memory, or conversely relegation from memory to storage.

Again an asset may be selected for inclusion in memory on the basis several metrics, including simply frequency or number of requests in a period; or bandwidth cost of asset x frequency or number of requests in a period.

Hence for example on one edge server, a particular game is very popular, and so the edge server has received a set of assets for use with the techniques herein. It may also be provided with an initial subset of assets to use in working memory (e.g. corresponding to welcome and menu screens, tutorial levels and the like), for example as identified by the developers, or empirically for example during Q&A testing.

As players on client devices stream the game, the primary server is requesting use of assets at the edge server according to any of the techniques herein, and the edge server can keep track of which assets are requested for use; where a first asset is being requested that the edge server has to refuse the use of (e.g. because it is in slow storage), and the bandwidth cost of the first asset x frequency or number of requests in a period for that first asset exceeds the equivalent calculation for a second asset currently in working memory, then it is more efficient for the second asset to be relegated to slow storage, and the first asset be promoted to working memory (assuming there is no spare memory to accommodate both).

By comparing the actual utilisation of assets in working memory, and the would-be utilisation of assets not in working memory (e.g. in slow storage or not yet acquired from the primary server), the edge server can continually maintain a good, and preferably the best, constellation of assets in memory to reduce overall band width and congestion at the primary server, and reduce trailing edge latency for the user, using the techniques herein.

### Variants

The above embodiments assume that some content may be added to the stream at the edge server.

However in principle some content could be added at the client, alternatively or in addition to at the edge server.

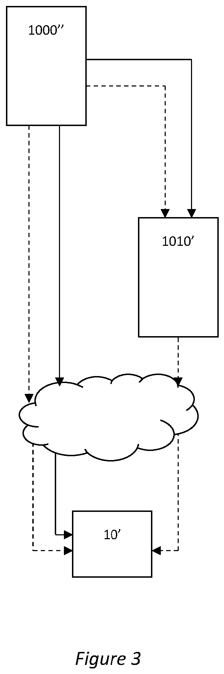

Referring now also to Figure 3, in this case, for example the primary server 1000" or the edge server 1010' may track which assets are the most effective to use, and download these to the client 10'. The client can then add them to the stream image themselves. Advantageously this can also reduce bandwidth, congestion, and trailing edge latency in the network between the edge server and the client (which may, kilometre-for-kilometre, be the slowest part of the journey).

It may also free up the working memory of the edge server to provide other assets to an incoming stream, either in the same game or in other games, so that even greater bandwidth and latency reductions are possibly between the primary server and edge server.

Hence in some embodiments of the present description the techniques herein may be implemented by using assets at the edge server, at the client, or at both. What implementation is chosen may depend on developer choice, the relative network conditions between the edge server and a client, and the computational power and memory capacity of the respective client. Different clients in contact with the same edge server may operate differently in this regard.

Hence in Figure 3, an edge server 1010' may estimate that a subset of assets are most common for a game currently being played on client device 10' and send a copy of these assets to the client device.

The edge server then relays to the client device requests from the primary server to the edge server to incorporate any of these assets into the stream, rather than do so itself. Meanwhile optionally it may incorporate other assets that it now has free memory to use.

The client device then incorporates the requested asset(s) into the stream or decoded partial image, as appropriate, in a similar manner to that described for the edge server previously.

Alternatively or in addition, when the client has received the selected assets, the edge server may then inform the primary server that these assets are now at the client device. The primary server may then transfer use of the techniques described herein from the edge server to the client device entirely for that device, at least for those assets. In this case the primary server may route streamed data directly to the client, as we as requests/commands to use the assets held by the client as per any of the techniques herein.

It will be appreciated that a hybrid approach may also be used, where some data is streamed to the client (optionally using the edge server as a passive hop, so that the overall path time remains similar) together with commands for the client, and some data is streamed via the edge server with commands to the edge server (e.g. where the primary server knows that the client device does not have an asset that the edge server can provide).

Hence in embodiments of the present description, the primary server (1000' , 1000") may output streams of partial images and/or audio together with requests for these to be added by one or both of the edge server and the client device. Where only a subset of possible assets is currently available at the edge server or the client device, this is received by the server which may then only omit parts of the images/audio within that subset, but also indicate which other parts could be replaced from the wider set of assets so as to facilitate updates to the subset as usage trends change, all as according to any of the techniques described elsewhere herein.

Meanwhile in embodiments of the present description, the edge server (1010, 1010') may receive from the primary server streams of partial images and/or audio together with requests for these to be added by the edge server. Where the edge server has limited memory and can only do so for a subset of possible assets, it may inform the primary server which parts of the images and/or audio it can currently reconstruct. It may also maintain records of what other parts of the images and/or audio could be replaced from the wider set of assets so as to swap assets with higher potential utility with those of lower utility in the memory, all as according to any of the techniques described elsewhere herein. The edge server then forwards the reconstructed images and/or audio to the end client, optionally with requests for further reconstruction if the client is using similar techniques.

Similarly in embodiments of the present description, the client device may receive complete streamed images and/or audio from the primary server, or may receive complete or reconstructed streamed images and/or audio from the edge server, or may receive partial images and/or audio from either server together with requests incorporate assets into the partial images and/or audio that the client device has previously received, as according to any of the techniques described elsewhere herein.

### User Streaming

The techniques described herein so far relate to when the game is generated on a primary server, and reducing the overall latency of the game streamed down from the primary server to the edge server and thereon to the client device. This may involve supplying all or part of an image from the edge server instead of from the primary server, and may even involve the edge server performing some computation that contributes to image generation on behalf of the primary server.

However, there are other scenarios that traditionally assume that the game is generated at the client device and then streamed up to a distribution server. These scenarios typically relate to so-called streamers, people who share their gameplay experience on a variety of streaming sites.

Typically a streamer will use a screen recorder, either as software within the client device or intercepting its output, to capture the game images. They may also use a camera to record themselves. They then typically composite these two image sources on a computer, with the video image comprising a relatively small part (e.g. typically less than ¼, 1/6, 1/8, or 1/10^{th} of the screen) and encode and stream the result up to the streaming service. The compositing computer may alternatively or in addition add other graphical overlays such as a logo of the streamer. Meanwhile the streaming service itself may also composite the received stream, for example with a live chat box for spectators to chat in.

This approach has a number of problems. Firstly, the local compositing and encoding of the game image, optional camera feed and any other graphical embellishments (e.g. a streamer's logo) is computationally burdensome. If done on the device running the game, it can impact game quality (e.g. frame rate). If done on a separate computer, it can introduce latency for spectators compared to active players of a game. However, and perhaps more importantly, most private individuals have a relatively low upload bandwidth compared to download. This means the uploaded streams are usually not of very high quality. For example, the game may generate HD or 4K quality images, but the stream that is possibly from the user's computer or device may only be SD or low quality / highly compressed HD. Additionally, in a cloud gaming application with thin client on a low-power device (e.g. smartphones), such high encoding computational cost might result in lower battery life, leading to a decrease in a player's quality of experience.

Furthermore, typically streaming services then decode the stream in order to add other feature such as chat, and then transcode the content for different user requirements; and transcoding of low quality images can be suboptimal and further impact the quality of the spectator experience.

It would therefore be preferable for such a streamer to play their game on a primary server, which has a much higher bandwidth than their own and is able to provide high quality images to the streaming distributor.

In this case, whilst the image from the primary server will still be displayed to the user of the client device, it would undermine potential benefits of the approach if the user then composited and streamed the game as before.

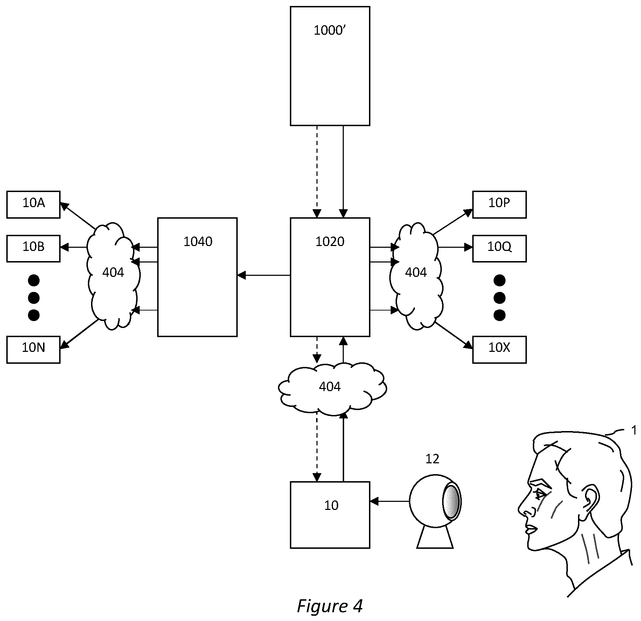

Accordingly, and referring now to Figure 4, in embodiments of the present description, such compositing and transfer to a streaming server may be performed by the edge server.

The primary server (1000, 1000', 1000") generates the interactive content (e.g. the game), and streams generated interactive content to the edge server 1020. Optionally this may involve any of the techniques described elsewhere herein, for example with regards to any of the modes described, or caching strategies of the edge server. Alternatively, the stream from the primary server to the edge server may be conventional and not utilise any caching of supplementary material at the edge server to complement the streamed output of the primary server.

In any case, the edge server then streams the images for the interactive content to the client device (10, 10'). The user of the client device can then play the game, sending input commands back to the primary server (typically via the edge server).

Typically, the client device (or computer used for streaming) is operably coupled to a camera 12 and can upload to the edge server just the video feed used for compositing with the game images (e.g. typically in parallel to game control inputs, but without game images); furthermore because this is typically a small insert (as noted above, typically less than ¼, 1/6, 1/8, or 1/10^{th} of the resolution of the game image), the per-frame bandwidth can be significantly smaller than that for the game images, and so this video can be uploaded with good quality from the client's device or computer using the upload bandwidth available to the user, and in any event does not have any impact on the quality of the game images, as these are not being uploaded from the client side at all. It will be appreciated that the uploaded video will typically also have associated audio from the streamer, which will also be upstreamed to the edge server.

The edge server now has access to good quality game images streamed down from the primary server (and optionally completed at the edge server), and good quality video of the streamer streamed up from the client device. Separately the edge server may also be relaying game control signals (e.g. keystrokes, button and/or joystick inputs, motion inputs, and optionally voice commands) from the client to the primary server, or these may be going directly from the client to the primary server.

Optionally, the primary server, edge server, and client may cooperate to ensure synchronisation of the game images and streamer video, particularly if the round trip latency between the edge server and the client is more than the duration of game image frames (typically but not necessarily 1/60^{th} of a second).

For example, either the primary server or the edge server may add a frame number, time stamp, or similar unique identifier to each respective image frame. Then the video frame captured by the user's camera can be associated with the unique identifier of the frame being displayed to the user on the user's client device at the time that the video frame was captured.

The edge server can use the unique identifier associated with both the game image and the video image to synchronise them, so that the composite image has both components correctly synchronised. It can be assumed that uploaded audio is separately synchronised with uploaded video, or is synchronised as part of the video stream.

The edge server typically performs the compositing of these two sources. Even in cases where a streamer does not include a video camera feed, they typically include other elements to be composited, such as streamer logos and the like, that may be uploaded from the client and/or cached at the edge server. Hence hereafter when referring to the composited game image and video image, the 'video image' is a general term for video camera image and/or any other streamer-sourced imagery composited onto the game image.

The server may comprise multiple nodes or processors (not shown) for respective tasks, for example having a first node provide the relay / downstream game image caching function, optionally a second node provide the upstream video image caching function (or this may also be done by the first node), and similarly optionally a further node to perform the compositing function, although again this may be optionally performed by any node of the edge server, or may be performed by a further compositing server local to the edge server. The client streamer may provide standard controls (e.g. via a streaming API or other convention) that provide information about the streamers intended placement and optionally shape or scaling of the video feed, and any other elements, together with an API key. The information may also include whether any green-screen background has already been removed or needs to be removed at the edge server before compositing.

The edge server may then communicate with a third party streaming distribution service, or may itself be part of a streaming distribution service.

In the first instance, the edge server may send the composited game image and video image to the third party streaming service (for example streaming server 1040), together with any credentials or streaming control data uploaded from the client streamer to allow that composite stream to be used with their streaming account.

Alternatively, the edge server may send the game image and video image as separate streams to the third party streaming service, together with the synchronisation information and any credentials or streaming control data, so that the third party streaming service can composite the images, together with any overlay of its own (such as a chat feed, and/or the streamers logo). This minimises the number of compositing steps. It also allows for separate transcoding of the game image and the video image prior to compositing, if needed for different end user spectators, which may in turn improved overall image quality in the final composite.

Other optional elements that may be added to a stream include a graphical overlay of the input device, to show want control inputs the streaming user is providing. The inputs can be highlighted based on the control inputs being forwarded by the edge server to the primary server as the streamer plays the game. This can be useful, for example, where the streamer is providing a tutorial and so sight of the inputs can be useful to other players.

Where the edge server communicates with a third party in this manner, the network link between the two may be optimised in any manner, and typically will in any event have a much higher bandwidth than that available to the client streamer. Again this serves to improve image quality and reduce latency.

The streaming server can then provide the stream to multiple spectator devices 10A, 10B, ... 10N, which may be of different types and may receive the encoded stream or in some cases receive a differently transcoded stream.

It will also be appreciated that the streaming server may also implement any of the techniques described herein to cache content received from the edge server; in this case the edge server may itself also partially operate like the primary server, in that it indicates what content cached at the streaming server is needed to complete an image. Common content may be the streamer's logo or the like.

In the second instance, the edge server is part of a streaming distribution service. In this case the functions of the third party streaming service are implemented by the edge server, optionally at a further node of the edge server, or by a distribution server local to the edge server.

In this case the edge server can composite the game image, video image, any streamer overlays, and any streaming service overlays (logos, chat functions etc.) together, and optionally transcoding the game image and video image streams separately, or once composited together, or once all the elements are composited together.

The edge server can then provide the stream to multiple spectator devices 10P, 10Q, ... 10X, which may be of different types and may receive the encoded stream or in some cases receive a differently transcoded stream.

It will be appreciated that in the above embodiments, optionally the primary server may operate transparently; that is to say, it is unmodified with respect to implementing the user streaming technique disclosed herein. In particular, the frame synchronisation can be performed by the edge server without any input from the primary server. This allows for the benefits of the user streaming technique to be enjoyed on legacy cloud streaming systems.

Alternatively it may provide frame numbers, timestamps, or other frame IDs for the purposes of synchronisation by the edge server or whichever server composites the streams and optionally implement any of the other techniques described herein.

Meanwhile it will be appreciated that the client device or companion streaming computer (considered collectively to be a client streaming device as appropriate) may operate in a conventional manner when streaming a game from a service that does not support the above technique, but may then switch to this technique when it is supported, and optionally when up upstream bandwidth of the client streaming device is below a threshold (e.g. a threshold needed for a predetermined image quality at the intended streamed resolution).

As noted elsewhere herein, the connections between the various servers of the streaming system may seek to optimise the connections between them. Optionally this optimisation may be based on quality of image feedback from the receiving server(s) or client(s) and/or quality of experience feedback from users, which is used to tune networking parameters / routes. Optionally the feedback is related to the parameters / routes by a machine learning model (e.g. a supervised or semi-supervised model) trained with such feedback to tune in the various parameters / routes.

### Variants

The above embodiments relate to streaming by a single streamer. However, optionally (for example for e-sports broadcasting), the above techniques may be applied to multiple streamers.

In this case, advantageously each streamer is uploading much less data (typically only live video of themselves, and their input controls), and this is to the edge server; the edge server then relays the input controls to the primary server that is running the instance(s) of the game for the e-sport event. This tends to reduce both overall latency (as less is being uploaded by the competitors, and only to the edge server - thereafter the edge server can forward inputs by e.g. high bandwidth / optimised means) and also latency variability between players (e.g. there is less scope for significant difference in latency between the competitors and the edge server, and less again if the edge server is routing the inputs to the primary server for all the competitors using the same route / means).

This makes cloud-hosted e-sports more responsive and fairer in terms of the technical infrastructure of the game.

Furthermore, the broadcast results will be better if the game images are coming from the primary server and the video images from the competitor's client devices, as described elsewhere herein.

The result will be a better experience for the competitors due to lower and fairer latency, and for the spectators, with better quality visuals.

In this case, an edge server may therefore receive multiple streams for respective instances and/or views of a game, and optionally corresponding video streams of the competitors, and have these composited, together with any other overlays and information, as described elsewhere herein.

Optionally, where competitors are geographically distant, they may use respective edge servers, and the respective edge servers then communicate using high bandwidth / optimised means.

Similarly optionally, an e-sports director may have access to a user interface to select game image streams and video streams (and any other graphical assets) and select which elements to composite. Hence the director can act as a compositing director and issue command to the edge server regarding how and what to composite. Hence for example a game stream from the primary server created for the director in an in-game spectator mode, which does not necessarily correspond to the view from any competitor, may be composited with the video streams from one or more competitors, for example to create a birds-eye view of an in-game skirmish, and the reactions of the competitors involved, as potentially one of a plurality of shared steams.

It will be appreciated that the above approach may be used for e-sports run over the internet, but may also be used where some or all of the respective parties (primary server, edge server, competitor clients, director client) are on a local area network.

### Hardware

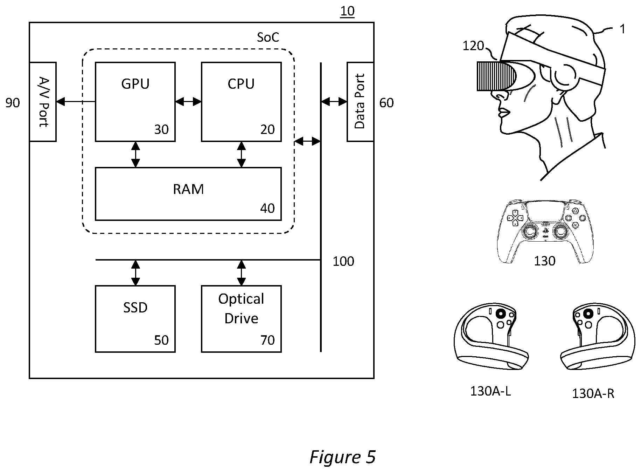

Referring now also to Figure 5, this Figure illustrates an example of a client device (10, 10'), but may also serve (either in physical or virtual form) as an example of at least part of the primary server that generates interactive content, and/or as an example of at least part of the edge server that caches content, and/or as an example of at least part of the streaming server that distributes a shared stream to client spectators. The client device (10, 10') may for example be a computer or console.

The client device comprises a central processor or CPU 20. The client device also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The client device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the client device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, worn by a user 1. Another example would be a TV or integral display (not shown)

Interaction with the client device is typically provided using one or more handheld controllers 130, and/or one or more VR controllers (130A-L,R) in the case of the HMD.

### Summaries

In a summary embodiment of the present description, an interactive content distribution system comprises the following.

An edge server (1010, 1010', 1020) configured to receive interactive content streamed from a primary server (1000', 1000") , and stream it to a client device (10, 10'), as described elsewhere herein.

The edge server being configured to receive data streamed from the client device, as described elsewhere herein. This data stream is typically a video camera (12) feed, but alternatively or in addition may comprise any other streamer-sourced imagery (e.g. logos, chat data, and the like) that is to be composited with the interactive content stream.

The edge server being configured to have the interactive content stream and the data stream composited together (for example by a third party service, or a node of the edge server or a server local to the edge server) to generate a sharing stream (e.g. the stream to distribute to client spectators), as described elsewhere herein.

The edge server being configured to have the sharing stream distributed to one or more spectator devices (for example by a third party service, or a node of the edge server or a server local to the edge server), as described elsewhere herein. Optionally any one or more of these may also transcode the stream into multiple resolution-bitrate pairs.

Instances of this summary embodiment implementing the methods and techniques described herein (for example by use of suitable software instruction) are envisaged within the scope of the application, including but not limited to that:
- the data stream comprises a video camera (12) feed, as described elsewhere herein;
- the edge server is configured to provide a frame identifier (e.g. a frame number, time stamp or other unique ID) to the client device for at least some frames (e.g. every frame, or every other frame, or every I-frame, or every Nth frame, etc.) of interactive content streamed to the client device, as described elsewhere herein;
   - the edge server is also configured to receive in association with at least some frames of the video camera feed a frame identifier corresponding to the frame of interactive content displayed at the client device when the respective frame of the video camera feed was captured, as described elsewhere herein; and
   - the edge server is configured to have the interactive content stream and the video camera feed stream composited together with a synchronisation based upon one or more interactive content stream frame identifiers associated with respective one or more frames of the video stream (e.g. based directly on the associated frame ID, or counting on from the last one if not provided for every frame, as appropriate), as described elsewhere herein;
- the edge server is configured to receive one or more graphical assets (e.g. streamer logos, custom borders, and the like) from the client device, and the edge server is configured to have at least one of the graphical assets incorporated into the sharing stream (e.g. by having it composited, typically at the same time as the interactive content stream and the video camera feed stream are composited together), as described elsewhere herein;
- the edge server is configured to receive interactive content input commands from the client device, and the edge server is configured to forward the interactive content input commands to the primary server, for the primary server to use to influence the state of the interactive content (e.g. to control an in game character and/or a virtual camera position and/or direction of view) , as described elsewhere herein;
   - In this case, optionally the edge server is configured to have a graphical representation of one or more interactive content input commands incorporated in to the sharing stream (e.g. by compositing), as described elsewhere herein;
- the edge server is configured to receive one or more streaming parameters from the client device (e.g. video feed position and/or scale for compositing with the interactive content images), and the edge server is configured to have the sharing stream generated based upon the one or more of the received streaming parameters, as described elsewhere herein;
- the edge server composites the interactive content stream and the video camera feed stream together to generate the sharing stream (and optionally any graphical assets and/or representations of input commands), as described elsewhere herein;
- the edge server is configured to provide one selected from the list consisting of the sharing stream, and the interactive content stream and the video camera feed stream (and optionally any graphical assets and/or representations of input commands), to a separate streaming distribution service in order to have the sharing stream distributed to one or more spectator devices, as described elsewhere herein;
- the edge server (optionally equivalently a node thereof or a local server) is configured to distribute the sharing stream to one or more spectator devices, as described elsewhere herein;
- the edge server comprises two or more nodes or local servers respectively assigned to one or more roles selected from the list consisting of receiving interactive content streamed from a primary server, receiving a video camera feed streamed from the client device, compositing streams together to generate a sharing stream, forwarding the interactive content input commands to the primary server, incorporating the graphical representation of one or more interactive content input commands in to the sharing stream, providing the sharing stream to a third party streaming distribution service, and providing the sharing stream to a plurality of spectator clients as a streaming distribution service, as described elsewhere herein;
- the edge server is configured to receive multiple streams of interactive content, the edge server is configured to receive multiple video camera feeds streamed from multiple client devices, the edge server is configured to receive compositing commands from a compositing director; and the edge server is configured to have one or more of the interactive content streams and one or more of the video camera feed streams composited together to generate a sharing stream responsive to the compositing commands from the compositing director, as described elsewhere herein;
- the edge server is further configured to store at least some cached content, being predetermined content of the interactive content generated by the primary server, the edge server is configured to receive data from the primary server indicating a cached content for provision to the client device by the edge server, and the edge server is configured to provide streamed generated interactive content and indicated cached content to the client device, as described elsewhere herein; and
   - In this instance, optionally the edge server is configured to have the interactive content stream, the indicated cached content, and the video camera feed stream, composited together (for example by a third party service, or a node of the edge server or a server local to the edge server) to generate a sharing stream (e.g. the stream to distribute to client spectators), as described elsewhere herein.

Furthermore it will be appreciated that the interactive content distribution system may comprise one or more primary servers, one or more additional edge servers, one or more other streaming distribution servers, and/or one or more client devices of spectators of the shared stream.

It will be appreciated that the interactive content distribution system by be implemented by hardware suitably adapted as applicable by software instruction or by the inclusion or substitution of dedicated hardware to enact the techniques or methods described elsewhere herein.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

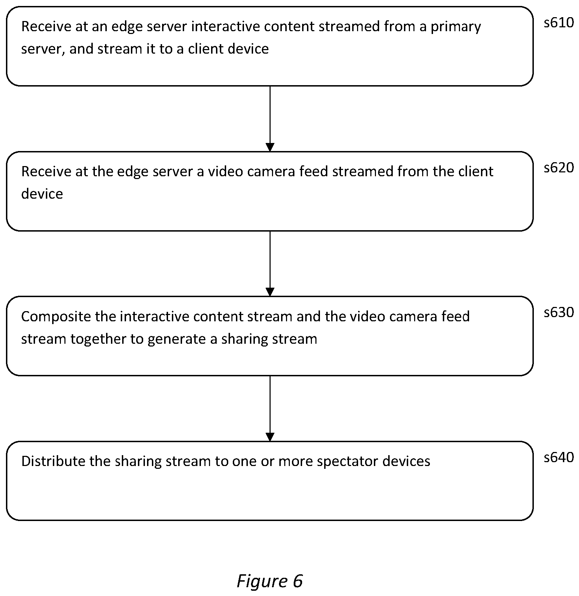

Turning now to Figure 6, in a summary embodiment of the present description, a method of interactive content distribution comprises the following steps:
In a first step s610 receiving, at an edge server, interactive content streamed from a primary server, and streaming it to a client device, as described elsewhere herein.
In a second step s620 receiving, at the edge server, data streamed from the client device, as described elsewhere herein. As noted previously this data stream is typically a video camera (12) feed, but alternatively or in addition may comprise any other streamer-sourced imagery (e.g. logos, chat data, and the like) that is to be composited with the interactive content stream.
In a third step s630, compositing the interactive content stream and the video camera feed stream together (for example by a third party service, or a node of the edge server or a server local to the edge server) to generate a sharing stream (e.g. a stream to be distributed to spectator devices), as described elsewhere herein.
And in a fourth step s640, distributing the sharing stream to one or more spectator devices (for example by a third party service, or a node of the edge server or a server local to the edge server), as described elsewhere herein.

It will be appreciated that the first and second steps may occur in any order or simultaneously, and typically occur together in an ongoing fashion.

It will be apparent to a person skilled in the art that variations in the above method corresponding to operation of the various embodiments of the apparatus as described and claimed herein and the methods and techniques as described and claimed herein are considered within the scope of the present invention, including but not limited to that:
- The method comprises the steps of providing a frame identifier to the client device for at least some frames of interactive content streamed to the client device, receiving from the client device, in association with at least some frames of the video camera feed, a frame identifier corresponding to the frame of interactive content displayed at the client device when the respective frame of the video camera feed was captured, and compositing the interactive content stream and the video camera feed stream together with a synchronisation based upon one or more interactive content stream frame identifiers associated with respective one or more frames of the video stream, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

### EMBODIMENTS

Although the present invention is defined in the claims, it should be understood that the present invention can also (alternatively) be defined in accordance with the following embodiments:
1. An interactive content distribution system, comprising:
   an edge server configured to receive interactive content streamed from a primary server, and stream it to a client device;
   the edge server being configured to receive data streamed from the client device;
   the edge server being configured to have the interactive content stream and data stream composited together to generate a sharing stream; and
   the edge server being configured to have the sharing stream distributed to one or more spectator devices.
2. The system of embodiment 1, in which the data streamed from the client device comprises a video camera feed.
3. The system of embodiment 2, in which:
   the edge server is configured to provide a frame identifier to the client device for at least some frames of interactive content streamed to the client device;
   the edge server is configured to receive in association with at least some frames of the video camera feed a frame identifier corresponding to the frame of interactive content displayed at the client device when the respective frame of the video camera feed was captured; and
   the edge server is configured to have the interactive content stream and the video camera feed stream composited together with a synchronisation based upon one or more interactive content stream frame identifiers associated with respective one or more frames of the video stream.
4. The system of any preceding embodiment, in which:
   the edge server is configured to receive one or more graphical assets from the client device; and
   the edge server is configured to have at least one of the graphical assets incorporated into the sharing stream.
5. The system of any preceding embodiment, in which:
   the edge server is configured to receive interactive content input commands from the client device; and
   the edge server is configured to forward the interactive content input commands to the primary server, for the primary server to use to influence the state of the interactive content.
6. The system of embodiment 5, in which:
   the edge server is configured to have a graphical representation of one or more interactive content input commands incorporated in to the sharing stream.
7. The system of any preceding embodiment, in which:
   the edge server is configured to receive one or more streaming parameters from the client device; and
   the edge server is configured to have the sharing stream generated based upon the one or more of the received streaming parameters.
8. The system of embodiment 2 or embodiment 3, in which:
   the edge server composites the interactive content stream and the video camera feed stream together to generate the sharing stream.
9. The system of any preceding embodiment, in which:
   the edge server is configured to provide one selected from the list consisting of:
      i. the sharing stream; and
      ii. the interactive content stream and the data stream,
   to a separate streaming distribution service in order to have the sharing stream distributed to one or more spectator devices.
10. The system of any preceding embodiment, in which:
   the edge server is configured to distribute the sharing stream to one or more spectator devices.
11. The system of any preceding embodiment, in which:
   the edge server comprises two or more nodes or local servers respectively assigned to one or more roles selected from the list consisting of:
   i. receiving interactive content streamed from a primary server;
   ii. receiving a video camera feed streamed from the client device;
   iii. compositing streams together to generate a sharing stream;
   iv. forwarding the interactive content input commands to the primary server;
   v. incorporating the graphical representation of one or more interactive content input commands in to the sharing stream;
   vi. providing the sharing stream to a third party streaming distribution service; and
   vii. providing the sharing stream to a plurality of spectator clients as a streaming distribution service.
12. The system of any preceding embodiment, in which:
   the edge server is configured to receive multiple streams of interactive content;
   the edge server is configured to receive multiple video camera feeds streamed from multiple client devices;
   the edge server is configured to receive compositing commands from a compositing director; and
   the edge server is configured to have one or more of the interactive content streams and one or more of the video camera feed streams composited together to generate a sharing stream responsive to the compositing commands from the compositing director.
13. The system of any preceding embodiment, in which:
   the edge server is further configured to store at least some cached content, being predetermined content of the interactive content generated by the primary server;
   the edge server is configured to receive data from the primary server indicating a cached content for provision to the client device by the edge server; and
   the edge server is configured to provide streamed generated interactive content and indicated cached content to the client device.
14. The system of embodiment 13, in which:
   the edge server is configured to have the interactive content stream, the indicated cached content, and the video camera feed stream, composited together to generate a sharing stream.
15. A method of interactive content distribution, comprising the steps of:
   receiving, at an edge server, interactive content streamed from a primary server, and stream it to a client device;
   receiving, at the edge server, data streamed from the client device;
   compositing the interactive content stream and the video camera feed stream together to generate a sharing stream; and
   distributing the sharing stream to one or more spectator devices.
16. The method of embodiment 15, in which the data streamed from the client device comprises a video camera feed.
17. The method of embodiment 16, comprising the steps of:
   providing a frame identifier to the client device for at least some frames of interactive content streamed to the client device;
   receiving from the client device, in association with at least some frames of the video camera feed, a frame identifier corresponding to the frame of interactive content displayed at the client device when the respective frame of the video camera feed was captured; and
   compositing the interactive content stream and the video camera feed stream together with a synchronisation based upon one or more interactive content stream frame identifiers associated with respective one or more frames of the video stream.
18. A computer program comprising computer executable instructions adapted to cause a computer system to perform the method of any one of embodiments 15 to 17.

## Claims

1. An interactive content distribution system, comprising:
an edge server configured to receive interactive content streamed from a primary server, and stream it to a client device;
the edge server being configured to receive data streamed from the client device;
the edge server being configured to have the interactive content stream and data stream composited together to generate a sharing stream; and
the edge server being configured to have the sharing stream distributed to one or more spectator devices.

2. The system of claim 1, in which the data streamed from the client device comprises a video camera feed.

3. The system of claim 2, in which:
the edge server is configured to provide a frame identifier to the client device for at least some frames of interactive content streamed to the client device;
the edge server is configured to receive in association with at least some frames of the video camera feed a frame identifier corresponding to the frame of interactive content displayed at the client device when the respective frame of the video camera feed was captured; and
the edge server is configured to have the interactive content stream and the video camera feed stream composited together with a synchronisation based upon one or more interactive content stream frame identifiers associated with respective one or more frames of the video stream.

4. The system of any preceding claim, in which:
the edge server is configured to receive one or more graphical assets from the client device; and
the edge server is configured to have at least one of the graphical assets incorporated into the sharing stream.

5. The system of any preceding claim, in which:
the edge server is configured to receive interactive content input commands from the client device; and
the edge server is configured to forward the interactive content input commands to the primary server, for the primary server to use to influence the state of the interactive content; optionally wherein
the edge server is configured to have a graphical representation of one or more interactive content input commands incorporated in to the sharing stream.

6. The system of any preceding claim, in which:
the edge server is configured to receive one or more streaming parameters from the client device; and
the edge server is configured to have the sharing stream generated based upon the one or more of the received streaming parameters.

7. The system of claim 2 or claim 3, in which:
the edge server composites the interactive content stream and the video camera feed stream together to generate the sharing stream.

8. The system of any preceding claim, in which:
the edge server is configured to provide one selected from the list consisting of:
i. the sharing stream; and
ii. the interactive content stream and the data stream,
to a separate streaming distribution service in order to have the sharing stream distributed to one or more spectator devices.

9. The system of any preceding claim, in which:
the edge server is configured to distribute the sharing stream to one or more spectator devices.

10. The system of any preceding claim, in which:
the edge server comprises two or more nodes or local servers respectively assigned to one or more roles selected from the list consisting of:
i. receiving interactive content streamed from a primary server;
ii. receiving a video camera feed streamed from the client device;
iii. compositing streams together to generate a sharing stream;
iv. forwarding the interactive content input commands to the primary server;
v. incorporating the graphical representation of one or more interactive content input commands in to the sharing stream;
vi. providing the sharing stream to a third party streaming distribution service; and
vii. providing the sharing stream to a plurality of spectator clients as a streaming distribution service.

11. The system of any preceding claim, in which:
the edge server is configured to receive multiple streams of interactive content;
the edge server is configured to receive multiple video camera feeds streamed from multiple client devices;
the edge server is configured to receive compositing commands from a compositing director; and
the edge server is configured to have one or more of the interactive content streams and one or more of the video camera feed streams composited together to generate a sharing stream responsive to the compositing commands from the compositing director.

12. The system of any preceding claim, in which:
the edge server is further configured to store at least some cached content, being predetermined content of the interactive content generated by the primary server;
the edge server is configured to receive data from the primary server indicating a cached content for provision to the client device by the edge server; and
the edge server is configured to provide streamed generated interactive content and indicated cached content to the client device; optionally wherein
the edge server is configured to have the interactive content stream, the indicated cached content, and the video camera feed stream, composited together to generate a sharing stream.

13. A method of interactive content distribution, the method comprising:
receiving, at an edge server, interactive content streamed from a primary server, and stream it to a client device;
receiving, at the edge server, data streamed from the client device;
compositing the interactive content stream and the video camera feed stream together to generate a sharing stream; and
distributing the sharing stream to one or more spectator devices.

14. The method of claim 13, in which the data streamed from the client device comprises a video camera feed; optionally wherein the method further comprises:
providing a frame identifier to the client device for at least some frames of interactive content streamed to the client device;
receiving from the client device, in association with at least some frames of the video camera feed, a frame identifier corresponding to the frame of interactive content displayed at the client device when the respective frame of the video camera feed was captured; and
compositing the interactive content stream and the video camera feed stream together with a synchronisation based upon one or more interactive content stream frame identifiers associated with respective one or more frames of the video stream.

15. A computer program comprising computer executable instructions adapted to cause a computer system to perform the method of any one of claims 13 or 14.
